# FASCICULE DE BREVET EUROPEEN

(11) **EP 0 748 767 B1**
(45) Date de publication et mention de la délivrance du brevet: **26.02.2003**
(21) Numéro de dépôt: 96115536.3
(22) Date de dépôt: 28.10.1992
(51) Int. Cl.: C01F 17/00, C08K 3/22

(54) **Procédé de preparation de compositions à base de sulfures de terres rares**
Verfahren zur Herstellung von Zusammenstellungen auf Basis der seltenen Erdmetalle
Process for the preparation of rare earth metal sulfide based compositions

(30) Priorité: 04.12.1991 FR 9114988
(43) Date de publication de la demande: 18.12.1996
(62) Demande divisionnaire de: 92402926.7
(73) Titulaire: RHODIA CHIMIE, 92408 Courbevoie Cédex (FR)
(72) Inventeur: Chopin, Thierry, 94320 Saint-Leu-La-Forêt (FR); Touret, Olivier, 17000 La Rochelle (FR); Guichon, Hervé, 93200 Saint-Denis (FR)
(74) Mandataire: Dubruc, Philippe

(56) Documents cités:
- EP-A- 0 203 838
- US-A- 4 545 967
- US-A- 4 765 931
- PROCEEDINGS OF THE SPIE, vol. 683, 18 Août 1986, pages 72-78, XP000605785 SAUNDERS K J ET AL: "CURRENT AND FUTURE DEVELOPMENT OF CALCIUM LANTHANUM SULFIDE"
- ACTA CRYSTALLOGRAPHICA, vol. 19, Juillet 1965, pages 14-19, XP000605798 FLAHAUT P J ET AL: "PHASES CUBIQUES TYPE TH3P4 DANS LES SULFURES, LES SELENIURES ET LES TELLURURES L2X3 ET L3X4 DES TERRES RARES, ET DANS LEURS COMBINAISONS ML2X4 AVEC LES SULFURES ET SELENIURES MX DE CALCIUM, STRONTIUM ET BARYUM. FORMATION ET PROPRIETES CRISTALLINES"
- MATERIALS RESEARCH BULLETIN, vol. 19, no. 9, Septembre 1984, pages 1215-1220, XP000605563 SATO M: "PREPARATION AND STRUCTURE OF SODIUM RARE-EARTH SULFIDES, NALNS2 (LN;RARE EARTH ELEMENTS)"
- COMPTES RENDUS DES SEANCES DE L'ACADEMIE DES SCIENCES SERIE II:MECANIQUE, PHYSIQUE, CHIMIE, SCIENCES DE LA TERRE, SCIENCES DE L'UNIVERS, vol. 307, no. 14, 7 Novembre 1988, pages 1625-1628, XP000605436 LEMOINE P ET AL: "SUR DES COMPOSES ISOMORPGES DE FORMULE GENERALE M(I)2M(III)23,33S36 ON TWO ISOMORPHOUS COMPOUNDS OF GENERAL FORMULA M(I)2M(III)23,33S36"
- CHEMICAL ABSTRACTS, vol. 94, no. 4, 26 Janvier 1981 Columbus, Ohio, US; abstract no. 24178, SETA, HIROKUNI ET AL: "Preparation of cerium sesquisulfide" XP002033239 & KENKYU KIYO - NIHON DAIGAKU BUNRIGAKUBU SHIZEN KAGAKU KENKYUSHO (1980), (15), DAI-5-BU, 5-10 CODEN: NDBSAL;ISSN: 0369-3562,
- ED. CZACK: "Gmelin Handbook of Inorganic Chemistry, 8th Edition, system number 39, part C7" 1983 , SPRINGER-VERLAG , BERLIN XP002033238 * page 597 - page 605 *

## Description

La présente invention concerne de nouvelles procédés de préparation des compositions à base de sulfures de terres rares.
Plus particulièrement, elle concerne des procédés de préparation des compositions a base de sesquisulfures de terres rares présentant, entre autres, des propriétés chromatiques améliorées.

Dans l'exposé qui suit de la présente invention, on entend par éléments terres rares, les éléments appartenant à la famille des lanthanides ayant un numéro atomique compris entre 57 et 71, ainsi que l'yttrium de numéro atomique 39.

Les sesquisulfures de terres rares, de formule générale M₂S₃ dans laquelle M désigne au moins une terre rare, sont des produits déjà connus en soi et largement décrits dans la littérature.

On sait, entre autre, qu'ils peuvent être utilisés comme pigments de coloration pour différents matériaux, comme par exemple les plastiques, les peintures et autres. Ils trouvent également des applications comme détecteurs de présence de soufre, ou bien encore dans la fabrication des matériaux constituant les fenêtres optiques, tant pour la lumière visible que pour l'infrarouge.

A titre d'exemple, l'utilisation des sesquisulfures de terres rares comme pigments colorés, a déjà été décrite notamment dans la demande de brevet EP-A- 0203838, au nom de la Demanderesse, et dont l'enseignement est inclus ici à titre de référence.

Or, pour cette application particulière, il s'avère que les sesquisulfures de terres rares connus à ce jour présentent des propriétés, notamment chromatiques, encore insuffisantes pour connaître un réel développement.

Une autre difficulté réside dans les procédés de synthèse de ce type de produits.

La plupart des procédés visant à l'obtention des sesquisulfures de terres rares à haute pureté monophasique, mettent en oeuvre des réactions du type solide-gaz.

Ainsi, ces sulfures peuvent être préparés par action de l'hydrogène sulfureux sur un oxyde de terres rares à haute température ( voir notamment le document EP-A- 0203838 précité ) ou sous haute pression. Il a également été proposé de faire réagir un agent sulfurant tel que le soufre, H₂S et/ou CS₂ sur un composé de terres rares, comme par exemple un oxyde, un carbonate ou un oxalate. De tels procédés sont notamment décrits dans la demande de brevet français FR-A- 2100 551, ou dans l'article de MM. HEINDL et LORIERS paru dans le Bulletin de la Société Chimique de France, 1974, n° 3-3.

Le document US-A-4 545 967 décrit un procédé pour la préparation de sulfures de terres rares et de calcium, baryum ou strontium, dans lequel on utilise du soufre élémentaire en combinaison avec des poudres de métaux.

Or, toutes les méthodes ci-dessus présentent l'inconvénient d'être peu, voire pas du tout, exploitables à l'échelle industrielle, car elles requièrent soit l'utilisation de H₂S pour obtenir un sesquisulfure de terres rares exempt d'oxysulfure, soit des conditions de température et/ou de pression incompatibles avec une fabrication industrielle. En outre, elles sont d'un contrôle délicat, et l'on évite difficilement la formation parasite, à côté du sesquisulfure de terres rares présentant la phase cristalline désirée, d'un oxysulfure de terres rares. Ainsi, les produits obtenus présentent des coordonnées chromatiques insuffisantes, et, de plus, la couleur originelle du sesquisulfure peut être dégradée par, par exemple, un oxysulfure de terres rares qui ne présente pas la couleur désirée.

La présente invention a pour but de remédier aux inconvénients susmentionnés.

Un objet de la présente invention est de proposer un procédé de fabrication permettant d'obtenir des compositions à base de sesquisulfure(s) de terres rares sous des conditions compatibles avec une exploitation industrielle.

A ces fins, il est maintenant proposé un procédé de préparation d'un sesquisulfure de terre rare de formule M₂S₃ et à structure lacunaire dans laquelle M représente au moins un élément pris dans le groupe constitué par les lanthanides et l'yttrium, et contenant au moins un élément alcalino-terreux dont une partie au moins est incluse dans le réseau cristallin dudit sesquisulfure, caractérisé en ce qu'il consiste à réaliser un mélange initial contenant au moins un composé de terre rare, du soufre et au moins un composé d'un élément alcalino-terreux, à chauffer ledit mélange initial sous une atmosphère non oxydante jusqu'à l'obtention de la phase sesquisulfure désirée, puis à refroidir le mélange ainsi traité.

On notera d'ores et déjà que les compositions obtenues par le procédé selon l'invention peuvent contenir un ou plusieurs alcalino-terreux.

L'élément alcalino-terreux ou dopant peut être présent sous différentes formes dans la composition. Toutefois, selon l'invention, il est de préférence essentiellement présent sous une forme combinée avec les sesquisulfures de terres rares. Dans ce cas, l'élément dopant est alors lié de façon irréversible aux sesquisulfures, en ce sens que, par exemple, même des lavages très poussés de ces derniers, ne permettent pas de l'éliminer.

De tels lavages peuvent conduire par contre à l'élimination des éventuels sulfures et/ou polysulfures d'alcalino-terreux présents à la surface des compositions, et donc non liés de façon irréversible à ces dernières.

Sans vouloir limiter la présente invention à une théorie, on peut avancer l'explication probable suivante :

On sait que les sesquisulfures de terres rares M₂S₃ cristallisent selon une structure cristallographique type Th₃ P₄, qui présente des lacunes au niveau du réseau des cations cette structure lacunaire peut être symbolisée en donnant aux sesquisulfures la formule M_{10,66} [ ]_{1,33} S₁₆. (voir notamment à ce sujet, W.H. ZACHARIASEN, "Crystal Chemical Studies of the 5f-Series of Elements. The Ce₂S₃-Ce₃S₄ Type of Structure", Acta Cryst. (1949). 2, 57.).

Or, selon l'invention, des éléments alcalino-terreux peuvent être introduits dans ces lacunes cationiques, jusqu'à saturation ou non de ces dernières.
La présence de l'élément dopant au sein des compositions selon l'invention peut être mise en évidence par simple analyse chimique. Par ailleurs, les analyses en diffraction X montrent qu'il y a conservation de la phase cristalline en Th₃ P₄ du sesquisulfure, avec dans certains cas une modification plus ou moins importante des paramètres de maille, fonction à la fois de la nature et de la quantité de l'élément dopant introduit.

De façon tout à fait inattendue et surprenante, il s'avère que cette insertion au sein du réseau cristallin du sesquisulfure confère aux compositions selon l'invention des caractéristiques chromatiques nettement améliorées par rapport à tous les sesquisulfures de terres rares connus à ce jour.
En outre, la présence de cet élément dopant peut avoir pour effet bénéfique de stabiliser aux hautes températures la structure cristalline du sesquisulfure considéré, et donc de conserver la couleur désirée dans une plus grande plage de température.

Mais d'autres caractéristiques, aspects et avantages de l'invention apparaîtront encore plus clairement à la lecture de la description qui va suivre.

Parmi les alcalino-terreux utilisables selon l'invention, on peut plus particulièrement citer le magnésium, le calcium, le baryum et le strontium.

Selon une autre caractéristique de l'invention, la quantité molaire en alcalino-terreux dans la composition est au moins égale à 0,1 %, et avantageusement comprise entre 5 % et 50 %, de la quantité molaire en la ou les terres rares présentes dans cette composition.

La nature de la ou des terres rares, ainsi que le type de réseau cristallin du sesquisulfure, sont choisis en fonction de la couleur que l'on désire obtenir pour la composition. Dans tous les cas, on observe que, pour un élément dopant convenablement sélectionné, les compositions selon l'invention présentent des colorations beaucoup plus intenses que celles des sesquisulfures correspondants, non dopés par un élément alcalino-terreux; par sesquisulfure correspondant, on entend le sesquisulfure contenant la ou les mêmes terres rares et présentant la même forme cristallographique.
Pour un sesquisulfure de terre rare donné, et donc de coloration donnée, l'invention permet ainsi d'accéder, après de simples essais de routine, à toute une gamme de couleurs améliorées, et ceci en jouant simplement sur la nature et/ou la concentration en élément dopant.

On donne ci-après des exemples de couleurs auxquelles il est possible d'aboutir, et ceci à titre purement illustratif et non limitatif :
- les compositions à base de sulfures de cérium ont une couleur variant du brun au rouge selon les conditions de préparation, en particulier, la température de calcination, Ils sont bruns ou rouge sang selon que l'on ait la phase Ce₂S₃ β orthorhombique (J.C.P.D.S. 20 269 ) ou la phase Ce₂S₃ γ cubique (J.C.P.D.S. 27 104)
- avec le lanthane, on obtient des composés jaunes correspondant à une structure La₂S₃ cubique (J.C.P.D.S. 25 1041)
- la coloration verte peut être obtenue avec le néodyme, et une coloration vert-jaune avec le praséodyme. Ils présentent respectivement la structure Nd₂S₃ cubique (J.C.P.D.S 26 1450) et la structure Pr₂S₃ cubique (J.C.P.D.S. 27 481)
- on dispose d'un composé jaune-marron avec le dysprosium de structure Dy₂S₃ cubique (J.C.P.D.S. 26 594)
- différentes nuances de marron peuvent aussi être obtenues : ocre avec le terbium de structure Tb₂S₃ cubique, brun avec l'erbium de structure Er₂S₃ monoclinique (J.C.P.D.S. 21 324) et beige foncé avec l'yttrium de structure Y₂S₃ monoclinique (J.C.P.D.S. 22 996).
- d'autres exemples de couleurs obtenues sont enfin : brun-gris avec le samarium de structure Sm₂S₃ cubique (J.C.P.D.S. 26 1480), brun-vert avec le gadolinium de structure Gd₂ S₃ γ cubique (J.C.P.D.S. 26 1424), vert-or avec le thulium de structure Tm₂S₃ monoclinique (J.C.P.D.S. 30 1364).

La coloration des compositions obtenues par le procédé de préparation selon l'invention peut être quantifiée au moyen des coordonnées chromatiques L*, a* et b* données dans le système CIE 1976 ( L*, a*, b*) tel que défini par la Commision Internationale d'Eclairage et répertorié dans le Recueil des Normes Françaises (AFNOR), couleur colorimétrique n° X08-12 (1983). Elles sont déterminées au moyen d'un colorimétre commercialisé par la Société Pacific Scientific. La nature de l'illuminant est D65. La surface d'observation est une pastille circulaire de 12,5 cm² de surface. Dans les mesures données, la composante spéculaire est exclue.
L* donne une mesure de la réflectance (nuance clair/sombre) et varie de 100 (blanc) à 0 (noir).

a* et b* sont les valeurs des tendances colorés :
a* positif = rouge
a* négatif = vert

b* positif = jaune
b* négatif = bleu

L* représente donc la variation du noir au blanc, a* la variation du rouge au vert et b* la variation du jaune au bleu.

Ainsi, à titre d'exemple, quand la terre rare est le cérium et que le sesquisulfure est sous sa forme cristallographique γ cubique, la composition selon l'invention présente les coordonnées chromatiques suivantes :
- L* au moins égale à 30, et notamment comprise entre 30 et 55,
- a* au moins égale à 30, et notamment comprise entre 35 et 65,
- b* compris généralement entre 0 et 35.

Ces coordonnées, et en particulier a*, correspondent à une couleur rouge intense exceptionnelle pour un sulfure de cérium Ce₂S₃ γ cubique, équivalente voire supérieure à celle des pigments rouges de référence, à savoir le sélénure de cadmium et le sulfosélénure de cadium.

Pour cette raison, les compositions obtenues par le procédé de préparation de l'invention sont avantageusement utilisées comme pigments pour la coloration de nombreux matériaux tels que, plastiques et peintures, par exemple. Les pigments selon l'invention ne présentent pas les problèmes de toxicité liés à la présence du cadmium dans certains pigments de l'art antérieur.
Dans cette application comme pigments, les compositions selon l'invention se présentent sous forme de poudres de granulométrie telle que le diamètre moyen des grains les constituant est compris généralement entre 0,2 µm et 5 µm environ. Elles permettent ainsi d'obtenir une excellente coloration des matériaux dans lesquels elles sont introduites.

Comme indiqué précédemment, l'invention a pour objet un procédé de fabrication industriel permettant d'accéder aux nouvelles compositions selon l'invention.

On notera que ce procédé convient particulièrement bien, entre autres, pour accéder à des compositions dans lesquelles le sesquisulfure de terres rares se présente sous une forme cristalline cubique, et notamment γ cubique.

Ce procédé consiste à réaliser un mélange initial contenant au moins un composé de terre rare, du soufre et au moins un composé d'un élément alcalino-terreux, à chauffer ledit mélange initial jusqu'à l'obtention de la phase sesquisulfure désirée, sous une atmosphère non oxydante, avantageusement réductrice, puis à refroidir le mélange ainsi traité.

Selon une caractéristique avantageuse et préférée de l'invention, le chauffage du mélange initial est réalisé en présence d'un agent réducteur.

La quantité d'agent réducteur ajouté est déterminée de manière à maintenir une pression partielle d'oxygène très basse dans le réacteur. Ainsi, la quantité de l'agent réducteur est avantageusement suffisante pour consommer l'oxygène libre et/ou combiné contenu dans le mélange initial.

Dans un premier mode de réalisation possible de l'invention, un agent réducteur est ajouté au mélange initial. Cet agent est généralement à base de carbone, tel que, par exemple, le graphite, le coke, la lignite, ou bien encore un composé organique générant du carbone par chauffage. Ce peut être aussi un réducteur métallique, par exemple l'aluminium.

Selon un second mode possible de réalisation, l'agent réducteur est contenu dans le gaz formant l'atmosphère non oxydante. On réalise alors avantageusement un balayage du mélange initial avec un gaz non oxydant, de préférence un gaz inerte, contenant un agent réducteur tel que par exemple l'hydrogène ou le monoxyde de carbone CO. On peut ainsi utiliser un mélange d'hydrogène avec un gaz inerte, tel qu'un mélange argon/hydrogène ou azote/hydrogène, ou bien encore un mélange argon/CO ou azote/CO. Ce balayage peut également être réalisé par de l'hydrogène ou du monoxyde de carbone seuls.

Il peut être avantageux lors de la montée en température, de maintenir le mélange à une température intermédiaire, par exemple comprise entre 250°C et 500°C avant de porter celui-ci à la température correspondant à la formation du sesquisulfure désirée. Ce maintien à une température intermédiaire est réalisé pendant une durée comprise généralement entre 15 mn et 1 heure.

Les composés de terres rares convenables pour l'invention sont, par exemple, choisis dans le groupe comprenant les composés oxycarbonés de terres rares, les sulfates, les oxydes de terres rares.

A titre de composés oxycarbonés de terres rares, on peut citer par exemple les carbonates, oxalates, acétates, malonates, tartrates de terres rares.

Les composés d'alcalino-terreux convenables pour l'invention sont, par exemple, choisis dans le groupe comprenant un oxyde, sulfure ou polysulfure, sulfate ou un composé oxycarboné tel qu'un oxalate, carbonate ou acétate d'alcalino-terreux. De préférence, on utilise des carbonates.

La quantité d'élément alcalino-terreux ajouté est déterminée pour avoir un rapport molaire : élément dopant / terre(s) rare(s) compris généralement entre 0,05 et 0,5, et de préférence entre 0,15 et 0,30, dans le mélange initial.

Par ailleurs, la quantité de soufre présent dans le mélange initial est déterminée pour avoir un rapport molaire : soufre/terre(s) rare(s) supérieur ou égale à 1,5 de préférence supérieur à 2.
Le soufre peut être introduit sous forme libre (soufre élémentaire solide ou gazeux).
De préférence, on utilise du soufre élémentaire à l'état solide.

Le mélange initial peut bien entendu comprendre plusieurs composés de terres rares et/ou d'alcalino-terreux, comme souligné ci-avant.

Le mélange est ensuite chauffé à une température et pendant un temps suffisants pour obtenir la phase sesquisulfure désirée, ce temps étant généralement d'autant plus court que la température est élevée. Cette température dépend bien entendu du sesquisulfure considéré.

Avantageusement, le mélange est chauffé à une température supérieure à 900°C, généralement comprise entre 1000°C et 1400°C, de préférence 1150 - 1300°C, et ceci pendant au moins 30 minutes, de préférence entre 30 mn et 2 heures.

La composition ainsi obtenue peut éventuellement être ensuite soumise à un lavage, par exemple un lavage à l'eau, pour diminuer la teneur en alcalino-terreux non liés.

Si nécessaire, la composition obtenue peut enfin être broyée (ou simplement désagglomérée (broyage peu poussé du type jet d'air) pour obtenir un diamètre moyen de grains compris entre 0,2 µm et 5 µm. Toutefois, selon le procédé de l'invention, on arrive généralement à cette granulométrie sans avoir à broyer le produit, ce qui constitue un avantage très important d'un point de vue économique. Le produit obtenu présente alors des coordonnées chromatiques remarquablement élevées dans la couleur spécifique du sesquisulfure de terre rare considéré.

## Revendications

1. Procédé de préparation d'un sesquisulfure de terre rare de formule M₂S₃ et à structure lacunaire dans laquelle M représente au moins un élément pris dans le groupe constitué par les lanthanides et l'yttrium, et contenant au moins un élément alcalino-terreux dont une partie au moins est incluse dans le réseau cristallin dudit sesquisulfure, **caractérisé en ce qu'**il consiste à réaliser un mélange initial contenant au moins un composé de terre rare, du soufre et au moins un composé d'un élément alcalino-terreux, à chauffer ledit mélange initial sous une atmosphère non oxydante jusqu'à l'obtention de la phase sesquisulfure désirée, puis à refroidir le mélange ainsi traité.

2. Procédé selon la revendication 1, **caractérisé en ce que** ledit chauffage est réalisé en présence d'un agent réducteur.

3. Procédé selon la revendication 2, **caractérisé en ce que** l'agent réducteur est ajouté au mélange initial.

4. Procédé selon la revendication 2, **caractérisé en ce que** l'agent réducteur est à base de carbone ou est capable de générer du carbone par chauffage.

5. Procédé selon la revendication 2, **caractérisé en ce que** l'agent réducteur est contenu dans, ou constitue complètement, le gaz formant l'atmosphère non oxydante.

6. Procédé selon la revendication 5, **caractérisé en ce que** l'agent réducteur est l'hydrogène et/ou le monoxyde de carbone.

7. Procédé selon l'une quelconque des revendications 1 à 6, **caractérisé en ce que** ledit composé de terre rare est choisi dans le groupe comprenant les composés oxycarbonés de terres rares, les sulfates de terres rares et les oxydes de terres rares.

8. Procédé selon la revendication 7, **caractérisé en ce que** ledit composé oxycarboné de terres rares est choisi dans le groupe comprenant les carbonates, les acétates, les oxalates, les tartrates et les malonates.

9. Procédé selon l'une quelconque des revendications 1 à 8, **caractérisé en ce que** le composé de l'élément alcalino-terreux est choisi dans le groupe comprenant les oxydes, les sulfures, les polysulfures, les sulfates et les composés oxycarbonés.

10. Procédé selon la revendication 8, **caractérisé en ce que** les composés oxycarbonés sont choisis dans le groupe comprenant les carbonates, les oxalates et les acétates, les carbonates étant préférés.

11. Procédé selon l'une quelconque des revendications 1 à 10, **caractérisé en ce que** le rapport molaire entre l'élément alcalino-terreux et l'élément terre rare dans le mélange initial est compris entre 0.05 et 0,5, et de préférence entre 0,15 et 0,30.

12. Procédé selon l'une quelconque des revendications 1 à 11, **caractérisé en ce que** le rapport molaire entre le soufre total et l'élément terre rare dans le mélange initial est supérieur ou égal à 1,5, et de préférence supérieur à 2.

13. Procédé selon l'une quelconque des revendications 1 à 12, **caractérisé en ce que** la température de chauffage est supérieure à 900°C.

14. Procédé selon l'une quelconque des revendications 1 à 13, **caractérisé en ce que**, après refroidissement, la composition est soumise à un lavage.

15. Procédé selon l'une quelconque des revendications 1 à 14, **caractérisé en ce que**, après refroidissement et éventuellement lavage, la composition est soumise à une désagglomération.

## Patentansprüche

1. Verfahren zur Herstellung eines Seltenerdsesquisulfids der Formel M₂S₃ und mit Lückenstruktur, worin M wenigstens ein Element aus der Gruppe, die gebildet wird von den Lanthaniden und Yttrium, darstellt, und das wenigstens ein Erdalkalielement enthält, von dem wenigstens ein Teil in das Kristallgitter besagten Sesquisulfids eingeschlossen ist, **dadurch gekennzeichnet, dass** es darin besteht, ein Anfangsgemisch herzustellen, das wenigstens eine Seltenerdverbindung, Schwefel und wenigstens eine Verbindung eines Erdalkalielements enthält, besagtes Anfangsgemisch unter einer nicht oxidierenden Atmosphäre bis zum Erhalt der gewünschten Sesquisulfidphase zu erhitzen, dann das so behandelte Gemisch abzukühlen.

2. Verfahren gemäß Anspruch 1, **dadurch gekennzeichnet, dass** besagtes Erhitzen in Gegenwart eines Reduktionsmittels durchgeführt wird.

3. Verfahren gemäß Anspruch 2, **dadurch gekennzeichnet, dass** das Reduktionsmittel zu dem Anfangsgemisch hinzugefügt wird.

4. Verfahren gemäß Anspruch 2, **dadurch gekennzeichnet, dass** das Reduktionsmittel auf Kohlenstoff basiert oder in der Lage ist, Kohlenstoff durch Erhitzen zu erzeugen.

5. Verfahren gemäß Anspruch 2, **dadurch gekennzeichnet, dass** das Reduktionsmittel in dem Gas, das die nicht oxidierende Atmosphäre bildet, enthalten ist, oder diese vollständig bildet.

6. Verfahren gemäß Anspruch 5, **dadurch gekennzeichnet, dass** das Reduktionsmittel Wasserstoff und/oder Kohlenmonoxid ist.

7. Verfahren gemäß einem der Ansprüche 1 bis 6, **dadurch gekennzeichnet, dass** besagte Seltenerdverbindung ausgewählt ist aus der Gruppe, die die Seltenerdoxokohlenstoffverbindungen, die Seltenerdsulfate und die Seltenerdoxide umfasst.

8. Verfahren gemäß Anspruch 7, **dadurch gekennzeichnet, dass** besagte Seltenerdoxokohlenstoffverbindung ausgewählt ist aus der Gruppe, die die Carbonate, die Acetate, die Oxalate, die Tartrate und die Malonate umfasst.

9. Verfahren gemäß einem der Ansprüche 1 bis 8, **dadurch gekennzeichnet, dass** die Verbindung des Erdalkallelements aus der Gruppe ausgewählt ist, die die Oxide, die Sulfide, die Polysulfide, die Sulfate und die Oxokohlenstoflverbindungen umfasst.

10. Verfahren gemäß Anspruch 8, **dadurch gekennzeichnet, dass** die Oxokohlenstoffverbindungen ausgewählt sind aus der Gruppe, die die Carbonate, die Oxalate und die Acetate umfasst, wobei die Carbonate bevorzugt sind.

11. Verfahren gemäß einem der Ansprüche 1 bis 10, **dadurch gekennzeichnet, dass** das Molverhältnis zwischen dem Erdalkalielement und dem Seltenerdelement in dem Anfangsgemisch zwischen 0,05 und 0,5 und vorzugsweise zwischen 0,15 und 0,30 liegt

12. Verfahren gemäß einem der Ansprüche 1 bis 11, **dadurch gekennzeichnet, dass** das Molverhältnis zwischen dem gesamten Schwefel und dem Seltenerdelement in dem Anfangsgemisch größer oder gleich 1,5 und vorzugsweise größer als 2 ist.

13. Verfahren gemäß einem der Ansprüche 1 bis 12, **dadurch gekennzeichnet, dass** die Temperatur des Erhitzens höher als 900°C ist.

14. Verfahren gemäß einem der Ansprüche 1 bis 13, **dadurch gekennzeichnet, dass** nach Abkühlen die Zusammensetzung einem Waschen unterzogen wird.

15. Verfahren gemäß einem der Ansprüche 1 bis 14, **dadurch gekennzeichnet, dass** nach Abkühlen und etwaigem Waschen die Zusammensetzung einem Desagglomerieren unterzogen wird.

## Claims

1. A process for preparing a rare earth sesquisulphide with formula M₂S₃ and a structure containing voids, in which M represents at least one element selected from the group formed by lanthanides and yttrium, and containing at least one alkaline-earth element at least a portion of which is included in the crystalline lattice of said sesquisulphide, **characterized in that** it consists of forming an initial mixture containing at least one compound of a rare earth, sulphur and at least one compound of an alkaline-earth element, heating said initial mixture in a non-oxidizing atmosphere until the desired sesquisulphide phase is obtained, then cooling the treated mixture.

2. A process according to claim 1, **characterized in that** said heating is carried out in the presence of a reducing agent.

3. A process according to claim 2, **characterized in that** the reducing agent is added to the initial mixture.

4. A process according to claim 2, **characterized in that** the reducing agent is based on carbon or is capable of generating carbon by heating.

5. A process according to claim 2, **characterized in that** the reducing agent is contained in, or is completely constituted by, the gas constituting the non-oxidizing atmosphere.

6. A process according to claim 5, **characterized in that** the reducing agent is hydrogen and/or carbon monoxide.

7. A process according to any one of claims 1 to 6, **characterized in that** said rare earth compound is selected from the group formed by rare earth oxycarbon compounds, rare earth sulphates and rare earth oxides.

8. A process according to claim 7, **characterized in that** said rare earth oxycarbon compound is selected from the group formed by carbonates, acetates, oxlates, tartrates and malonates.

9. A process according to any one of claims 1 to 8, **characterized in that** the compound of the alkaline-earth element is selected from the group formed by oxides, sulphides, polysulphides, sulphates and oxycarbon compounds.

10. A process according to claim 8, **characterized in that** the oxycarbon compounds are selected from the group formed by carbonates, oxalates and acetates, preferably carbonates.

11. A process according to any one of claims 1 to 10, **characterized in that** the mole ratio between the alkaline-earth element and the rare earth element in the initial mixture is in the range 0.05 to 0.5, preferably in the range 0.15 to 0.30.

12. A process according to any one of claims 1 to 11, **characterized in that** the mole ratio between the total sulphur and the rare earth element in the initial mixture is 1.5 or more, preferably greater than 2.

13. A process according to any one of claims 1 to 12, **characterized in that** the heating temperature is greater than 900°C.

14. A process according to any one of claims 1 to 13, **characterized in that** after cooling, the composition is washed.

15. A process according to any one of claims 1 to 14, **characterized in that** after cooling and optional washing, the composition is disaggregated.
